# EUROPÄISCHE PATENTSCHRIFT

(11) **EP 0 450 378 B1**
(45) Veröffentlichungstag und Bekanntmachung des Hinweises auf die Patenterteilung: **16.08.1995**
(21) Anmeldenummer: 91104095.4
(22) Anmeldetag: 16.03.1991
(51) Int. Cl.: B01D 11/04

(54) **Verfahren und Anlage zur Aufbereitung von Stoffen oder Stoffgemischen**
Process and device for the treatment of products or of their mixtures
Procédé et dispositif de traitement de matières ou de ces mélanges

(30) Priorität: 31.03.1990 DE 4010400
(43) Veröffentlichungstag der Anmeldung: 09.10.1991
(73) Patentinhaber: Ben-Nasr, Hedi, Dr., D-45892 Gelsenkirchen (DE); Reimann, Klaus, D-45259 Essen (DE)
(72) Erfinder: Ben-Nasr, Hedi, Dr.rer.nat., W-4650 Gelsenkirchen (DE); Kriegel, Ernst, Prof. Dr.-Ing., W-4300 Essen 1 (DE); Reimann, Klaus, W-4300 Essen 15 (DE)

(56) Entgegenhaltungen:
- EP-A- 0 137 214
- EP-A- 0 156 374
- DE-A- 3 229 041
- GB-A- 2 072 189

## Beschreibung

Die Erfindung bezieht sich auf ein Verfahren zur Aufbereitung von Stoffen oder Stoffgemischen durch Behandlung mit flüssigen oder während der Behandlung in überkritischem Zustand befindlichen Lösungsmitteln mittels Dispergieren des Behandlungsgutes beispielsweise zur Auftrennung von Stoffgemischen durch Gegenstromextraktion mit flüssigen oder während der Extraktion in überkritischem Zustand sich befindenden Lösungsmitteln, bei dem das Lösungsmittel dem unteren Teil einer Extraktionskolonne zugeführt, die mit den zu extrahierenden Stoffen beladene Lösungsmittelphase aus dem oberen Teil abgeführt sowie anschließend durch Druckerniedrigung und/oder Temperaturänderung in ihre Bestandteile zerlegt und das Lösungsmittel in die Extraktionsstufe zurückgeführt wird. Die Erfindung bezieht sich ferner auf eine Vorrichtung zur Durchführung dieses Verfahrens.

Bekannte Aufbereitungsverfahren dieser Art beschränken sich auf die Behandlung von Stoffen oder Stoffgemischen, die sich ausreichend dispergieren lassen, um eine wirksame Weiterverarbeitung zu erreichen. Schwierigkeiten bereitet insbesondere die Aufbereitung bestimmter Stoffgemische. So erfolgt die übliche Trennung auch hochviskoser pastöser Stoffgemische mittels Lösungsmittelextraktion der löslichen Komponenten, z. B. der Ölkomponente im Rohlecithin mittels Aceton, wobei unlösliches Reinlecitihin gewonnen wird. Bei vielen Anwendungen, insbesondere im Lebensmittelbereich, stören jedoch die im Produkt zurückbleibenden Spuren der meist giftigen Lösungsmittel. Es sind bereits, wie etwa in der deutschen Offenlegungsschrift DE-A-35 36 622, Verfahren beschrieben worden, die unter Normalbedingungen gasförmige Lösungsmittel verwenden, die unbedenklich sind und kaum Restspuren hinterlassen. Meist werden unter- oder überkritisches Kohlendioxid vorgeschlagen, aber auch einfache oder halogenierte Kohlenwasserstoffe oder Gemische derselben. Zur Erhöhung der Extraktionswirkung werden auch sogenannte Schleppmittel zugesetzt. Aus der deutschen Offenlegungsschrift DE-A-30 11 185 ist ein Verfahren bekannt, bei dem aus Rohlecithin durch Behandlung mit bezüglich Druck und Temperatur überkritischem Kohlendioxid das Öl extrahiert und das Reinlecithin als feste Masse gewonnen wird. Bei dem Verfahren nach der deutschen Offenlegungsschrift DE-A-32 29 041 läßt die Produktqualität erheblich zu wünschen übrig, da sich eine gleichmäßig pulverige Konsistenz der extrahierten Feststoffe nicht erreichen läßt. Angaben über die Löslichkeit vieler organischer Verbindungen in überkritischen Gasen ergeben sich aus der deutschen Auslegeschrift DE-B-1 493 190. Bei pastösen Stoffgemischen bereitet die Durchdringung mit dem Extraktionsmittel erhebliche Schwierigkeiten. In der deutschen Offenlegungsschrift DE-A-35 36 622 werden daher ein Verfahren und eine Vorrichtung zur Gewinnung von Reinlecithin aus schleimigem Rohlecithin beschrieben, wobei das flüssige oder überkritische, unter Normalbedingungen gasförmige Extraktionsmittel durch Düsen in einem Düsenring am Boden eines zylindrischen Extraktionsbehälters dem Stoffgemisch zugeführt wird und das Lösungsmittel die Düsen mit einer Reynoldszahl von mehr als 40 000 verlassen und im Extraktionsraum mit einer Reynoldszahl von 2700 bis 8000 aufwärtsströmen soll. Die hohen Scherkräfte sollen eine Dispergierung des pastösen Stoffgemisches bewirken. Das Verfahren entsprechend der deutschen Offenlegungsschrift DE-A-30 11 185 erfordert nach den dort gemachten Angaben eine unwirtschaftlich hohe Extraktionszeit von 3 bis 7 Stunden, ohne daß nähere Hinweise über das Ein- und Ausbringen sowie über die Form des Stoffaustausches der Phasen gegeben werden. Die Düsenvorrichtung nach der deutschen Offenlegungsschrift DE-A-35 36 622 soll die Extraktionszeit auf etwa 2 Stunden reduzieren. Versuche zeigten jedoch Klumpenbildung und Ölhäute, so daß keine gleichmäßige Entölung erreicht werden konnte.

In der deutschen Offenlegungsschrift DE-A-33 29 249 werden ein Verfahren zur Extraktion formlabiler fließfähiger Massen mittels Hochdruckextraktion sowie eine Vorrichtung zur Durchführung dieses Verfahrens beschrieben, wobei das Einsatzgemisch und/oder das Extraktionsgas in eine Mischkammer eingedüst werden. Dort finden sowohl die Vermischung des Extraktionsgases mit dem Einsatzgemisch als auch die Beladung des Extraktionsmittels mit dem Extrakt statt. Für die Durchführung des Prozesses werden Drücke von 600 bar bis 1200 bar benötigt.

Das Einsatzgemisch, z. B. Rohlecithin, wird nach DE-A-33 29 249 mit dem Extraktionsgas nicht vorbeladen, sondern in die Mischkammer eingedüst und erst dort mit dem Gas vermischt, wo auch die Extraktion (Beladung des Extraktionsgases mit Extrakt) stattfindet. Pastöse oder hochviskose Stoffgemische, wie z. B. Rohlecithin, lassen sich aber nach der beschriebenen Art nicht wirtschaftlich auftrennen, da trotz der sehr hohen Drücke von über 600 bar und des aufwendigen Aufbaus von Zweistoffdüsen auch bei kleinsten Düsenbohrungen keine ausreichende Dispergierung des Einsatzgemisches erreicht und die Betriebssicherheit wegen der Verstopfungsgefahr nicht gewährleistet wird.

Untersuchungen an Rohlecithin zeigten, daß mit allen beschriebenen Verfahren und Vorrichtungen keine befriedigende Extraktion der Ölkomponente durchgeführt und somit kein hochwertiges Reinlecithin gewonnen werden kann.

Der Erfindung liegt daher die Aufgabe zugrunde, eine Möglichkeit zu schaffen, praktisch beliebige Stoffe oder Stoffgemische einer Aufbereitung mittels Dispergieren zugänglich zu machen. Zur Lösung dieser Aufgabe wird bei einem Verfahren der eingangs beschriebenen Art vorgeschlagen, daß das Stoffgemisch bereits vor der Dispergierung mit dem Lösungsmittel beladen und danach z. B. in die Extraktionskolonne eingedüst wird. Mit einer solchen Behandlung können auch hochviskose pastöse Stoffe oder Stoffgemische etwa aus den Bereichen Lebensmittel, Petrochemie, Kosmetik, Pharmazie, Kunststoffverarbeitung und Erdölverarbeitung sowie Hopfenextrakte, Destillationsrückstände, Keramikpasten, Kunststoffschmelzen o. dgl. aufbereitet und/oder aufgetrennt werden. Die erfindungsgemäße Vorbeladung des Einsatzstoffgemisches mit dem überkritischen Extraktionsmittel führt zu einer leichten und kontrollierten Dispergierung hochviskoser oder pastöser Stoffe bzw. Stoffgemische, die anschließend z. B. leicht aufgetrennt werden können. Hierdurch sind keine aufwendigen, störungsanfälligen Zweistoffdüsen und zu hohen Drücke erforderlich. Zur optimalen Dispergierung und Auftrennung hochviskoser Stoffgemische gemäß der vorliegenden Erfindung reichen einfache Einstoffdüsen und Drücke von 75 bar bis max. 400 bar aus. Es besteht die Möglichkeit, auch hochviskose pastöse Stoffgemische beim oder vor dem Einbringen in den Extraktionsraum mit dem strömenden Extraktionsmittel so fein zu dispergieren und aufzubereiten, daß der Stoffübergang wesentlich verbessert wird, die dispergierten Teilchen aber grob genug sind, daß sie sich nach der Extraktion am Boden des Extraktionsbehälters absetzen und von dort abgezogen werden können. Als Lösungsmittel kommen alle flüssigen oder gasförmigen, unter- oder überkritischen Extraktionsmittel in Frage, wie z.B. CO₂, SO₂, N₂O, Kohlenwasserstoffe, halogenierte Kohlenwasserstoffe sowie Gemische, insbesondere aber CO₂. Durch diese Behandlung des Stoffgemisches wird eine ausgezeichnete und für die nachfolgende Extraktion bestens geeignete Aufbereitung erreicht, so daß sowohl der Extraktionsgrad als auch die Extraktionszeit und die Beschaffenheit der erzeugten Feststoffe gegenüber dem bisherigen Ausbringen erheblich verbessert sind.

Zweckmäßig erfolgt die Beladung des Stoffgemisches mit dem Lösungsmittel vor der Extraktion bis zur Sättigung des Stoffgemisches mit dem Lösungsmittel. Dadurch wird ohne besonderen Aufwand das zur Beladung verwendete Lösungsmittel genutzt.

Gemäß einem weiteren Schritt der Erfindung findet die Beladung des Stoffgemisches mit dem Lösungsmittel in einer der Extraktionskolonne vorgeschalteten Beladungskolonne statt, aus der das beladene Stoffgemisch abgezogen und bei der Eindüsung in die Extraktionskolonne über ein Düsensystem fein dispergiert wird. In der Beladungskolonne können gezielt die für eine möglichst weitgehende Beladung des Stoffgemisches mit Lösungsmittel günstigsten Bedingungen eingestellt und geeigneten Maßnahmen vorgesehen werden.

Für die Behandlung von hochviskosen pastösen Stoffgemischen etwa im Nahrungsmittelbereich, insbesondere zur Entölung von Rohlecithin empfiehlt sich die Verwendung von Kohlendioxid als Lösungsmittel wegen seiner physiologischen Unbedenklichkeit. Außerdem erübrigen sich die bei Kohlenwasserstoffen erforderlichen Vorkehrungen zum Explosionsschutz.

Für die Beladung von Rohlecithin in der Beladungskolonne bei besonders günstigen Behandlungsbedingungen wird vorgeschlagen, sie bei einer Temperatur von 32 bis 80°C, vorzugsweise von 40 bis 60°C, und einem mindestens dem kritischen Druck von Kohlendioxid entsprechenden Druck, vorzugsweise von 75 bis 400 bar, durchzuführen.

Für die Entölung von Rohlecithin in der Extraktionskolonne bei besonders günstigen Behandlungsbedingungen wird vorgeschlagen, sie bei einer Temperatur unterhalb der kritischen Temperatur von Kohlendioxid und einem Druck oberhalb des kritischen Drucks von Kohlendioxid, vorzugsweise von 75 bis 400 bar, durchzuführen.

Alternativ kommt für die Entölung von Rohlecithin in der Extraktionskolonne in Betracht, sie bei einer Temperatur zwischen der kritischen Temperatur von Kohlendioxid und 80°C und einem höheren Druck als dem kritischen Druck von Kohlendioxid, vorzugsweise zwischen dem dreifachen kritischen Druck und 400 bar, durchzuführen.

In weiterer Ausgestaltung der Erfindung wird die Beladung und die Extraktionsbehandlung von Rohlecithin mit Kohlendioxid bei gleichem Druck vorgenommen. Hierbei ist vorteilhaft, daß der Beladungs- und der Extraktionsbereich an die gleiche Druckversorgung und -überwachung angeschlossen werden können.

Als besonders geeignet für die Durchführung des erfindungsgemäßen Verfahrens wird eine Vorrichtung vorgeschlagen, bei der der Extraktionskolonne eine Beladungskolonne vorgeschaltet ist, die im oberen Teil mit einer Gemischzuführung, einer Lösungsmittelzuführung und einem Flüssigkeitsverteiler sowie im übrigen mit Füllkörpern oder anderen geeigneten Einbauten zur Oberflächenvergrößerung versehen ist. Diese Anordnung gewährleistet eine weitgehende Aufbereitung des Stoffgemisches für die Beladung mit Lösungsmittel und gleichzeitig eine schnelle Beladung bis zu einem hohen Beladungsgrad.

Zweckmäßig ist hierbei im oberen Teil der Extraktionskolonne eine Düse oder ein Düsensystem zur Dispergierung des einzudüsenden beladenen Stoffgemisches angeordnet und diesem ein Feinfilter vorgeschaltet. Dadurch wird die Aufbereitung des Stoffgemisches in der Beladungskolonne voll für die anschließende Gegenstromextraktion genutzt, da die Dispergierung sehr gleichmäßig erfolgt und auf die für die Extraktion günstigste Teilchengröße eingestellt werden kann.

Es empfiehlt sich, am Lösungsmittelauslaß der Extraktionskolonne ein Filter vorzusehen, das etwa mitgeschleppte Feststoffteilchen zurückhält.

Im übrigen ist u.a. für die Regenerierung der Lösungsmittelphase der Extraktionskolonne ein Abscheider nachgeschaltet, in dem das Lösungsmittel auf einen Druck von 30 bis 70 bar bei einer Temperatur von 20 bis 60°C entspannt wird, um die gelösten Bestandteile abzuscheiden.

Gemäß einem weiteren Schritt der Erfindung sind der Beladungskolonne mehrere Extraktionskolonnen in Kaskaden- oder Parallelanordnung zur chargenweisen Behandlung des beladenen Stoffgemisches nachgeschaltet. Dadurch wird bei chargenweise stattfindender Extraktion ein quasikontinuierliches Ausbringen der Behandlungsprodukte erreicht.

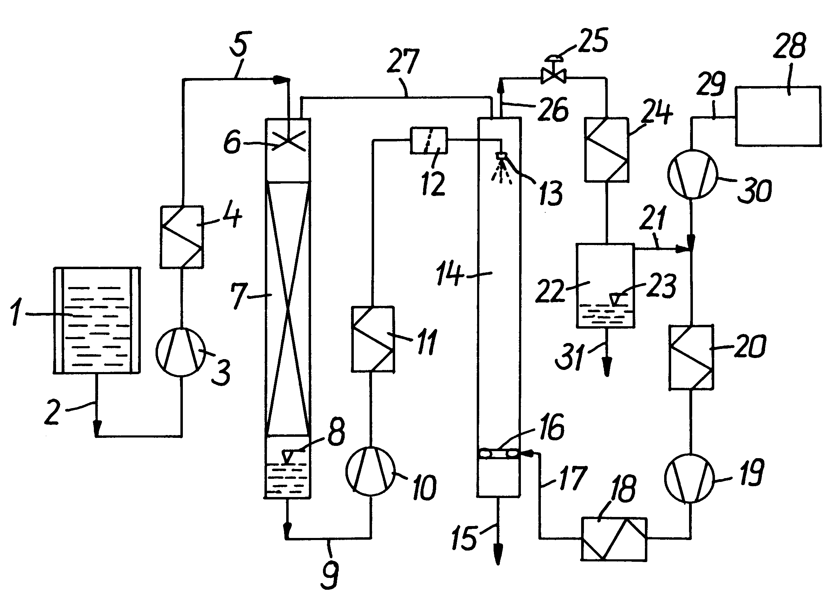

In der Zeichnung ist beispielhaft ein Verfahrensschema zur erfindungsgemäßen Entölung von Rohlecithin wiedergegeben. Das in einem thermostatisierbaren Vorratsbehälter 1 befindliche Rohlecithin gelangt über eine Leitung 2 zu einer Förderpumpe 3, wo es auf den Verfahrensdruck in einer Beladungskolonne 7 komprimiert und über einen Wärmetauscher 4, eine Leitung 5 und einen Flüssigkeitsverteiler 6 dem oberen Teil der Beladungskolonne 7 zugeführt wird. Die Beladungskolonne 7 ist mit Füllkörpern oder anderen geeigneten Einbauten versehen, die eine Oberflächenvergrößerung des herabfließenden Rohlecithins bewirken, wodurch eine Beladung bzw. Sättigung des Rohlecithins mit überkritischem Kohlendioxid begünstigt wird. Die Temperatur in der Beladungskolonne 7 beträgt 32°C bis 80°C, vorzugsweise 40°C bis 60°C. Der CO₂-Druck in der Beladungskolonne 7 liegt vorzugsweise zwischen 75 bar und 400 bar, wobei es besonders vorteilhaft ist, wenn der Druck in beiden Kolonnen, der Beladungskolonne 7 und einer anschließenden Extraktionskolonne 14, gleich groß ist. In der Beladungskolonne 7 fließt das Rohlecithin von oben nach unten, die CO₂-Phase bleibt hingegen stationär. Nach kurzer Zeit wird die ruhende überkritische CO₂-Phase mit den löslichen Ölanteilen gesättigt, so daß hier keine Ölanteile mehr aus dem Rohlecithin extrahiert werden können. Das mit CO₂ beladene gesättigte Rohlecithin sammelt sich im Sumpf der Beladungskolonne 7 und wird von dort über eine Leitung 9 abgezogen und über eine Pumpe 10, einen Wärmetauscher 11, ein Feinfilter 12 einer Düse oder einem Düsensystem 13 zugeführt.

Ein Füllstandsregler 8, der mit der Pumpe 3 gekoppelt ist, sorgt dafür, daß sich im Sumpf der Beladungskolonne 7 immer ausreichend Rohlecithin befindet, so daß in die Leitung 9 eine zwar mit CO₂ beladene, aber homogene Phase gelangt.

Die Förderleistung der Pumpe 10 wird so eingestellt, daß eine optimale Druckdifferenz zwischen dem Druck vor der Düse oder dem Düsensystem 13 und dem Verfahrensdruck in der Extraktionskolonne 14 eingehalten wird. Die optimale Druckdifferenz, die je nach Beschaffenheit des zu entölenden Rohlecithins 5 bis 40 bar betragen kann, sorgt für eine gute und gleichmäßige Feinverteilung des Rohlecithins in dem flüssigen oder überkritischen Kohlendioxid in der Extraktionskolonne 14. Durch die feine Verteilung des Rohlecithins wird in vorteilhafter Weise eine sehr große spezifische Oberfläche geschaffen, wodurch eine schnelle Entölung stattfindet und eine Wiederkoagulation der Lecithinteilchen vermieden wird.

Durch die gleichmäßige Erzeugung von Rohlecithintröpfchen mit einer Größe von vorwiegend 50 »m bis 200 »m wird außerdem der unerwünschte Austrag feinster Tröpfchen mit der CO₂-Fluidphase auf ein Minimum reduziert. Das zur Extraktion der Ölanteile aus dem Rohlecithin verwendete flüssige oder überkritische CO₂ wird dem unteren Teil der Extraktionskolonne 14 über einen geeigneten Lösungsmittelverteiler 16 zugeführt. Der Lösungsmittelverteiler 16 bewirkt, daß der Lösungsmittelstrom gleichmäßig über den Kolonnenquerschnitt verteilt wird, und daß die herabsinkenden feinen Lecithinteilchen im unteren Bereich der Kolonne 14, oberhalb des Lösungsmittelverteilers 16, ständig in Wirbelbewegung bleiben. Das flüssige oder überkritische Kohlendioxid strömt den feinen Rohlecithintröpfchen entgegen und belädt sich dabei zunehmend mit den Ölanteilen des Rohlecithins, während die herabsinkenden Lecithintröpfchen zunehmend entölt werden und schließlich als entöltes pulveriges Reinlecithin in den Sumpf der Extraktionskolonne 14 gelangen, von wo es chargenweise oder kontinuierlich über eine Leitung 15 entnommen wird.

Bei der Entölung von Rohlecithin durch Extraktion der Ölanteile mit flüssigem Kohlendioxid sind eine Temperatur zwischen 20°C und 31°C und ein Druck von p > p_{K}, vorzugsweise 400 bar > p > 75 bar, besonders vorteilhaft. Wird hingegen überkritisches Kohlendioxid als Lösungsmittel für die Extraktion der Ölanteile des Rohlecithins verwendet, so betragen erfindungsgemäß die Temperaturen 32°C bis 80°C, vorzugsweise 40°C bis 60°C, und der Druck p > p_{K}, vorzugsweise 400 bar > p > 3 p_{K}.

Die mit den Ölanteilen aus dem Rohlecithin beladene CO₂-Phase verläßt die Extraktionskolonne 14 kopfseitig über eine Leitung 26 und wird über ein Entspannungsventil 25 und einen Wärmetauscher 24 in einen Abscheider 22 geführt und dort auf 30 bar bis 70 bar, vorzugsweise auf 40 bar bis 60 bar, bei einer Temperatur von 20°C bis 60°C, entspannt. Das abgeschiedene Öl sammelt sich im Abscheider 22 und wird über eine Leitung 31 abgezogen, wobei der Flüssigkeitsstand mit Hilfe eines Niveaureglers 23 eingestellt und kontrolliert wird. Das weitestgehend vom Öl befreite Kohlendioxid verläßt den Abscheider 22 über eine Leitung 21 und wird nach Verflüssigung im Wärmetauscher 20 und Einstellung des Verfahrensdruckes und der Verfahrenstemperatur mittels einer Pumpe 19 und einen Wärmetauscher 18 dem unteren Teil der Extraktionskolonne 14 über eine Leitung 17 und den Lösungsmittelverteiler 16 erneut zugeführt. Die im Prozeß auftretenden Gasverluste werden dadurch ersetzt, daß flüssiges Kohlendioxid aus dem CO₂-Tank 28 über eine Leitung 29 entnommen und über eine Pumpe 30 dem CO₂-Kreislauf zugeführt wird.

Die Beladungskolonne 7 und die Extraktionskolonne 14 sind miteinander über eine Leitung 27 verbunden, so daß in beiden Kolonnen der gleiche Druck herrscht und der geringe Lösungsmittelverbrauch in der Beladungskolonne 7 ausgeglichen wird. Bei unterschiedlichem Druck ist eine besondere Lösungsmittelzuführung für den Ersatz verbrauchten Lösungsmittels vorgesehen.

### Beispiel 1:

Ein bei Raumtemperatur (20°C) hochviskoses pastöses Soja-Rohlecithin, bestehend aus 0,7 Gew.-% Wasser, 35 Gew.-% flüssigen Ölanteilen sowie 64,3 Gew.-% Acetonunlöslichem (Lecithine) wurde hinsichtlich Verdüsbarkeit in einer Hochdrucksichtzelle untersucht. Ein Teil des Rohlecithins wurde in einer vorgeschalteten Füllkörperkolonne mit Kohlendioxid bei 50°C und 140 bar gesättigt, während ein weiterer Teil lediglich auf 50°C erwärmt wurde. In der Sichtzelle, die mit Kohlendioxid gefüllt war, wurde zum Versprühen des Rohlecithins eine Vollkegeldüse eingebaut. Temperatur und Druck in der Sichtzelle wurden zwischen 20°C und 80°C sowie 75 bar und 300 bar variiert, so daß sowohl flüssiges (bei Temperaturen unterhalb von 31°C) als auch überkritisches Kohlendioxid in der Sichtzelle vorlagen. Die durch die Düse geförderten Mengen Rohlecithin wurden so eingestellt, daß Druckdifferenzen vor und nach Düsenausgang von 1 bar bis 120 bar eingestellt werden konnten.

Es hat sich gezeigt, daß sich das hochviskose pastöse, mit CO₂ nicht vorbehandelte Rohlecithin in flüssigem und in überkritischem Kohlendioxid nicht versprühen läßt. Auch bei Druckdifferenzen von über 60 bar gelingt eine Dispergierung des aus der Düse ungleichmäßig austretenden, zusammenhängenden Rohlecithinmaterials nicht.

Das mit überkritischem Kohlendioxid gesättigte Rohlecithin weist eine wesentlich niedrigere Viskosität und ein deutlich besseres Fließverhalten auf und läßt sich im gesamten untersuchten Temperatur- und Druckbereich hervorragend versprühen, wobei hierzu bereits Druckdifferenzen von 5 bar bis 10 bar ausreichen. Kleine Druckdifferenzen führen zur Erzeugung von größeren Rohlecithintröpfchen, während hohe Druckdifferenzen ein zu feines Versprühen (Vernebelung) des Rohlecithins bewirken.

Eine optimale Teilchengrößenverteilung kann erreicht werden, wenn eine konstante, optimale Druckdifferenz eingestellt wird, die außer von der Konsistenz des zu versprühenden Rohlecithins und dem Aufbau des verwendeten Düsensystems vor allem von der Temperatur und dem Druck des fluiden Mediums Kohlendioxid abhängen. Bei flüssigem Kohlendioxid haben sich Druckdifferenzen von 10 bis 30 bar als besonders gut geeignet erwiesen, während bei überkritischem Kohlendioxid Druckdifferenzen von 5 bar bis 20 bar ausreichend sind.

### Beispiel 2:

Ein Soja-Rohlecithin bestehend aus 0,7 Gew.-% Wasser, 35 Gew.-% Ölanteilen sowie 64,3 Gew.-% acetonunlöslichem Lecithin wurde in einer Versuchsanordnung gemäß der Zeichnung durch Extraktion mit flüssigem Kohlendioxid bei einer Temperatur von 28°C und einem Druck von 140 bar entölt. Das hochviskose Rohlecithin wurde in einer vorgeschalteten Füllkörperkolonne mit Kohlendioxid bei einer Temperatur von 50°C und einem Druck von 140 bar gesättigt. Wie die Vorversuche in einer Hochdrucksichtzelle zeigten, läßt sich das so vorbehandelte Rohlecithin in flüssigem Kohlendioxid mit Hilfe einer geeigneten Düse versprühen, wobei eine optimale Tröpfchengrößenverteilung erreicht wird, wenn die Druckdifferenz vor der Düse und im Extraktionsraum 15 bar bis 25 bar beträgt. Dementsprechend wurde das mit CO₂ gesättigte Rohlecithin durch eine Vollkegeldüse mit einem Massenstrom von 800 g/h bei einer Druckdifferenz von 20 bar geschickt und in flüssigem Kohlendioxid in einem Extraktor mit einem Durchmesser von 11 cm und einer Effektivhöhe von 80 cm versprüht. Das Lösungsmittel (CO₂) strömt den herabsinkenden Lecithintröpfchen entgegen und belädt sich dabei zunehmend mit den löslichen Ölanteilen des Rohlecithins, während die feinen, zunehmend entölten Lecithinpartikel langsam nach unten absinken und sich am Boden des Extraktors als entöltes pulveriges Reinlecithin sammeln, welches kontinuierlich ausgeschleust wird. Die mit den Ölanteilen und geringfügig mit Wasser beladene CO₂-Phase verläßt den Extraktor kopfseitig und wird in einem nachgeschalteten Abscheider auf 50 bar bei einer Temperatur von 30°C entspannt, wodurch die extrahierten Komponenten abgeschieden werden. Das regenerierte Kohlendioxid wird durch Kühlung verflüssigt, mit Hilfe einer Förderpumpe und eines Wärmetauschers auf einen Druck von 150 bar und eine Temperatur von 28°C gebracht und dem unteren Teil des Extraktors über einen Lösungsmittelverteiler zugeführt.

Der Lösungsmittelverteiler ist trichterförmig gebaut, damit das Ausschleusen des entölten Reinlecithins erleichtert wird, und ist mit mehreren feinen Bohrungen versehen, durch die das im Kreislauf geführte Kohlendioxid von 150 bar auf den Extraktionsdruck von 140 bar entspannt wird. Die Bohrungen sind außerdem so angebracht, daß lediglich unmittelbar oberhalb des Lösungsmittelverteilers durch die austretenden CO₂-Strahlen eine Wirbelung der herabsinkenden Lecithinpartikel stattfindet, während weiter oben eine weitgehend laminare Strömung herrscht. Bei einem Lösungsmitteldurchsatz von 84 kg/h CO₂ werden aus dem Sumpf des Extraktors pro Stunde 522 g hellgelbes, feinpulveriges Reinlecithin mit 97,6 Gew.-% acetonunlöslichen Anteilen gewonnen, während im Abscheider pro Stunde 275 g hellbraunes Öl erhalten wird, welches 1,2 Gew.-% Lecithin (als Acetonunlösliches) und 1,7 Gew.-% Wasser enthält.

### Beispiel 3:

Ein Soja-Rohlecithin bestehend aus 0,7 Gew.-% Wasser, 35 Gew.-% Ölanteilen sowie 64,3 Gew.-% acetonunlöslichem Lecithin wurde in einer Versuchsanordnung gemäß der Zeichnung durch Extraktion mit überkritischem Kohlendioxid bei einer Temperatur von 50°C und einem Druck von 300 bar entölt. Das hochviskose Rohlecithin wurde in einer vorgeschalteten Füllkörperkolonne mit Kohlendioxid bei einer Temperatur von 50°C und einem Druck von 300 bar gesättigt. Wie die Vorversuche in einer Hochdrucksichtzelle zeigten, läßt sich das so vorbehandelte Rohlecithin in überkritischem Kohlendioxid mit Hilfe einer geeigneten Düse versprühen, wobei eine optimale Tröpfchengrößenverteilung erreicht wird, wenn die Druckdifferenz vor der Düse und im Extraktionsraum 5 bis 10 bar beträgt. Dementsprechend wurde das mit CO₂ gesättigte Rohlecithin durch eine Vollkegeldüse mit einem Massenstrom von 800 g/h bei einer Druckdifferenz von 8 bar geschickt und in überkritischem Kohlendioxid in einem Extraktor mit einem Durchmesser von 11 cm und einer Effektivhöhe von 80 cm versprüht. Das Lösungsmittel (CO₂) strömt den herabsinkenden Lecithintröpfchen entgegen und belädt sich dabei zunehmend mit den löslichen Ölanteilen des Rohlecithins, während die feinen, zunehmend entölten Lecithinpartikel langsam nach unten absinken und sich am Boden des Extraktors als entöltes pulveriges Reinlecithin sammeln, welches bei Versuchsende entnommen wird. Die mit den Ölanteilen und geringfügig mit Wasser beladene CO₂-Phase verläßt den Extraktor kopfseitig und wird in einem nachgeschaltenen Abscheider auf 50 bar bei einer Temperatur von 30°C entspannt, wodurch die extrahierten Komponenten abgeschieden werden. Das regenerierte Kohlendioxid wird durch Kühlung verflüssigt, mit Hilfe einer Förderpumpe und eines Wärmetauschers auf einen Druck von 310 bar und eine Temperatur von 50°C gebracht und dem unteren Teil des Extraktors über einen Lösungsmittelverteiler wieder zugeführt. Der Lösungsmittelverteiler ist ringförmig gebaut und mit mehreren feinen Bohrungen versehen, durch die das im Kreislauf geführte Kohlendioxid von 310 bar auf den Extraktionsdruck von 300 bar entspannt wird. Die Bohrungen sind außerdem so angebracht, daß lediglich unmittelbar oberhalb des Lösungsmittelverteilers durch die austretenden CO₂-Strahlen eine Wirbelung der herabsinkenden Lecithinpartikel stattfindet, während weiter oben eine weitgehend laminare Strömung herrscht. Nach 1,5 Stunden wurde die Rohlecithinzufuhr gestoppt, während das Lösungsmittel Kohlendioxid weiterhin mit einem Massendurchsatz von 76 kg CO₂/h für eine weitere Stunde im Kreislauf gefahren wurde. Anschließend wurde das Kohlendioxid abgelassen, und aus dem Extraktor wurden 778 g hellgelbes und feinpulveriges Reinlecithin mit 98,1 Gew.-% acetonunlöslichen Anteilen entnommen. Im Abscheider fielen 412 g hellbraunes Öl an, welches 1,3 Gew.-% Lecithin (als Acetonunlösliches) und 1,9 Gew.-% Wasser enthielt.

## Patentansprüche

1. Verfahren zur Aufbereitung von hochviskosen pastösen Stoffen oder Stoffgemischen durch Behandlung mit flüssigen oder während der Behandlung in überkritischem Zustand befindlichen Lösungsmitteln mittels Dispergieren des Behandlungsgutes, dadurch gekennzeichnet, daß das Behandlungsgut bereits vor der Dispergierung bzw. Extraktion unter nichtextraktiven Bedingungen mit dem Lösungsmittel beladen und danach zur Dispergierung beispielsweise in eine Extraktionskolonne (14) eingedüst wird.

2. Verfahren nach Anspruch 1, dadurch gekennzeichnet, daß die Aufbereitung zur Auftrennung von Stoffgemischen durch Gegenstromextraktion mit den Lösungsmitteln erfolgt, wobei das Lösungsmittel dem unteren Teil einer Extraktionskolonne zugeführt, die mit den zu extrahierenden Stoffen beladene Lösungsmittelphase aus dem oberen Teil abgeführt sowie anschließend durch Druckerniedrigung und/oder Temperaturänderung in ihre Bestandteile zerlegt wird und das Lösungsmittel in die Extraktionsstufe zurückgeführt wird.

3. Verfahren nach Anspruch 1 oder 2, dadurch gekennzeichnet, daß die Beladung des Stoffgemisches mit dem Lösungsmittel vor der Extraktion bis zur Sättigung des Stoffgemisches mit dem Lösungsmittel erfolgt.

4. Verfahren nach Anspruch 1 bis 3, dadurch gekennzeichnet, daß zur Behandlung von hochviskosen pastösen Stoffgemischen Kohlendioxid verwendet wird.

5. Verfahren nach Anspruch 4, dadurch gekennzeichnet, daß die Beladung von Rohlecithin in der Beladungskolonne (7) bei einer Temperatur von 32 bis 80°C, und einem mindestens dem kritischen Druck von Kohlendioxid entsprechenden Druck, erfolgt.

6. Verfahren nach Anspruch 4 oder 5, dadurch gekennzeichnet, daß die Entölung von Rohlecithin in der Extraktionskolonne (14) bei einer Temperatur unterhalb der kritischen Temperatur von Kohlendioxid und einem Druck oberhalb des kritischen Drucks von Kohlendioxid, erfolgt.

7. Verfahren nach Anspruch 4 oder 5, dadurch gekennzeichnet, daß die Entölung von Rohlecithin in der Extraktionskolonne (14) bei einer Temperatur zwischen der kritischen Temperatur von Kohlendioxid und 80°C und einem höheren Druck als dem kritischen Druck von Kohlendioxid, erfolgt.

8. Verfahren nach einem der Ansprüche 4 bis 7, dadurch gekennzeichnet, daß die Beladung und die Extraktionsbehandlung des Rohlecithins mit Kohlendioxid bei gleichem Druck erfolgen.

9. Vorrichtung zur Durchführung des Verfahrens nach einem der Ansprüche 1 bis 8, dadurch gekennzeichnet, daß der Extraktionskolonne (14) eine Beladungskolonne (7) vorgeschaltet ist, die im oberen Teil mit einer Gemischzuführung (5), einer Lösungsmittelzuführung (27) und einem Flüssigkeitsverteiler (6) sowie im übrigen mit Füllkörpern oder anderen geeigneten Einbauten zur Oberflächenvergrößerung des zu beladenden Stoffgemisches versehen ist.

10. Vorrichtung nach Anspruch 9, gekennzeichnet durch eine Auslegung der im oberen Teil der Extraktionskolonne (14) zur Dispergierung des einzudüsenden beladenen Stoffgemisches angeordneten Düse oder des Düsensystems (13) derart, daß die erzeugten Gemischtröpfchen vorwiegend eine Größe von 50 bis 200 »m haben.

11. Vorrichtung nach Anspruch 9 oder 10, dadurch gekennzeichnet, daß der Extraktionskolonne (14) ein Abscheider (22) nachgeschaltet ist, in dem das Lösungsmittel auf einen Druck von 30 bis 70 bar bei einer Temperatur von 20 bis 60°C entspannt wird.

## Claims

1. Process for the preparation of highly viscous paste-like substances or their mixtures by treatment with liquid solvents or during the treatment with solvents in supercritical state by dispersion of the material for treatment, characterised in that the material for treatment is already laden with the solvent prior to dispersion or extraction under non-extractive conditions, and is then sprayed for dispersion, for example, into an extraction column (14).

2. Process according to Claim 1, characterised in that the preparation is carried out for separation of mixtures of substances by countercurrent extraction with the solvents, wherein the solvent is supplied to the lower section of an extraction column, which is drawn off from the upper portion with the solvent phase laden with the substances to be extracted and is subsequently broken down into its constituents by a reduction in pressure and/or change in temperature, and the solvent is fed back into the extraction stage.

3. Process according to Claim 1 or 2, characterised in that the mixture of substances is laden with the solvent prior to extraction until the mixture of substances is saturated with the solvent.

4. Process according to Claims 1 to 3, characterised in that carbon dioxide is used for treatment of the highly viscous paste-like substances.

5. Process according to Claim 4, characterised in that raw lecithin is laden in the loading column (7) at a temperature of 32° to 80°C and at a pressure corresponding at least to the critical pressure of carbon dioxide.

6. Process according to Claim 4 or 5, characterised in that oil is removed from raw lecithin in the extraction column (14) at a temperature below the critical temperature of carbon dioxide and at a pressure above the critical pressure of carbon dioxide.

7. Process according to Claim 4 or 5, characterised in that oil is removed from raw lecithin in the extraction column (14) at a temperature between the critical temperature of carbon dioxide and 80°C and at a higher pressure than the critical pressure of carbon dioxide.

8. Process according to Claims 4 to 7, characterised in that the loading and extraction treatment of the raw lecithin are carried out with carbon dioxide at the same pressure.

9. Device for implementing the process according to one of Claims 1 to 8, characterised in that a loading column (7), which is provided in the upper section with a mixture supply pipe (5), a solvent supply pipe (27) and a liquid distributor (6) as well as with fillers and other suitable inclusions to increase the surface area of the mixture of substances to be laden, is connected upstream of the extraction column (14).

10. Device according to Claim 9, characterised by a design of a nozzle or nozzle system (13) arranged in the upper section of the extraction column (14) for dispersion of the laden mixture of substances to be sprayed, such that the size of the formed droplets of the mixture is predominantly 50 to 200 »m.

11. Device according to Claim 9 or 10, characterised in that a separator (22), in which the solvent is vented to a pressure of 30 to 70 bar at a temperature of 20° to 60°C, is connected downstream of the extraction column (14).

## Revendications

1. Procédé de préparation de matières pâteuses à viscosité élevée, ou de leurs mélanges, par traitement avec des solvants liquides ou se trouvant, pendant le traitement, en état hypercritique, par dispersion du produit à traiter, caractérisé en ce que le produit à traiter est chargé avec le solvant déjà avant la dispersion ou son extraction, dans des conditions ne permettant pas l'extraction, et est ensuite injecté, pour la dispersion, par exemple dans une colonne d'extraction (14).

2. Procédé suivant la revendication 1, caractérisé en ce que le traitement destiné à séparer des mélanges de matière se fait par extraction à contre-courant avec les svants, étant entendu que le solvant est envoyé à la parie inférieure d'une colonne d'extraction, la phase du solvant chargée avec les matières à extraire est évacucuée à la partie supérieure, puis enfin, par abaissement de la pression et/ou par modification de la température, cette phase est séparée en ses constituants, et le solvant est renvoyé dans l'étage d'extraction.

3. Procédé suivant la revendication 1 ou la revendication 2, caractérisé en ce que la charge du mélange de matière avec le solvant avant l'extraction se fait jusqu'à saturation du mélange de matière par le solvant.

4. Procédé suivant l'une quelconque des revendications 1 à 3, caractérisé en ce que, pour le traitement de mélanges de matières pâteux à viscosité élevée, on utilise du dioxyde de carbone.

5. Procédé suivant la revendication 4, caractérisé en ce que la charge de lécithine brute dans la colonne de chargement (7) se fait à une température de 32 à 80°C et sous une pression correspondant au moins à la pression critique du dioxyde de carbone.

6. Procédé suivant la revendication 4 ou la revendication 5, caractérisé en ce que le déshuilage de lécithine brute dans la colonne d'extraction (14) se fait à une température inférieure à la température critique du dioxyde de carbone et sous une pression supérieure à la pression critique du dioxyde de carbone.

7. Procédé suivant la revendication 4 ou la revendication 5, caractérisé en ce que le déshuilage de la lécithine brute dans la colonne d'extraction (14) se fait à une température comprise entre la température critique du dioxyde de carbone et 80°C, et sous une pression supérieure à la pression critique du dioxyde de carbone.

8. Procédé suivant l'une quelconque des revendications 4 à 7, caractérisé en ce que le chargement et le traitement d'extraction de la lécithine brute par le dioxyde de carbone se font sous la même pression.

9. Dispositif pour la mise en oeuvre du procédé suivant l'une quelconque des revendications 1 à 8, caractérisé en ce qu'avant la colonne d'extraction (14), est installée une colonne de chargement (7) qui, à sa partie supérieure, est équipée d'une arrivée de mélange (5), d'une arrivée de solvant (27) et d'un répartiteur de liquide (6), ainsi que, pour le reste, de corps de remplissage ou d'autres constituants appropriés, destinés à augmenter la surface externe du mélange de matières à charger.

10. Dispositif suivant la revendication 9, caractérisé par une conception de la buse ou du système de buses (13), disposé à la partie supérieure de la colonne d'extraction (14) pour la dispersion du mélange de matières, qui a été chargé et qui doit être injecté par buse, cette conception étant tellle que les goutelettes de mélange formées aient, de façon prépondérante, une grosseur de 50 à 200 micromètres.

11. Dispositif suivant la revendication 9 ou la revendication 10, caractérisé en ce qu'après la colonne d'extraction (14), est disposé un décanteur (22), dans lequel le solvant est détendu à une pression de 30 à 70 bars, sous une température de 20 à 60°C.
